# EUROPÄISCHE PATENTSCHRIFT

(11) **EP 2 144 525 B1**
(45) Veröffentlichungstag und Bekanntmachung des Hinweises auf die Patenterteilung: **20.03.2013**
(21) Anmeldenummer: 08735102.9
(22) Anmeldetag: 09.04.2008
(51) Int. Cl.: A44B 18/00, B29C 33/00, B29C 33/50, B29C 33/54, B29C 43/28, B29C 45/17, B29C 45/40, B29C 45/44, B29C 67/00, B29C 67/08

(54) **VERFAHREN ZUM HERSTELLEN EINES KUNSTSTOFF-HAFTVERSCHLUSSTEILS SOWIE VORRICHTUNG ZUM DURCHFÜHREN DES VERFAHRENS**
METHOD FOR PRODUCING AN ADHESIVE FASTENING ELEMENT MADE OF PLASTIC AND DEVICE FOR CARRYING OUT SAID METHOD
PROCÉDÉ DE PRODUCTION D'UN ÉLÉMENT DE FERMETURE À ADHÉSIF EN MATIÈRE PLASTIQUE, ET DISPOSITIF POUR LA MISE EN OEUVRE DE CE PROCÉDÉ

(30) Priorität: 11.04.2007 DE 102007017128
(43) Veröffentlichungstag der Anmeldung: 20.01.2010
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Bartels & Partner
(86) Internationale Anmeldenummer: PCT/EP2008/002786
(87) Internationale Veröffentlichungsnummer: WO 2008/125253

(56) Entgegenhaltungen:
- EP-A- 1 759 607
- WO-A-00/50208
- WO-A-2006/099000
- DE-T2- 69 311 107
- DE-T2- 69 922 264
- JP-A- 57 110 420
- US-A- 5 785 784
- US-A1- 2006 220 271
- US-B1- 6 180 205

## Beschreibung

Die Erfindung betrifft ein Verfahren zum Herstellen eines Kunststoff-Haftverschlußteils, das ein Trägerteil aufweist, von dem eine Vielzahl an Stielteilen vorsteht, an deren dem Trägerteil gegenüberliegenden Enden jeweils ein Kopfteil angeordnet ist, wobei zur Formung der Stielteile ein Formwerkzeug eingesetzt wird, das sich zwischen Trägerteil und den Kopfteilen erstreckt und das nach Formen der Stielteile in einem Entformvorgang entfernt wird. Die Erfindung betrifft des weiteren eine Vorrichtung zum Durchführen des dahingehenden Verfahrens.

Dahingehende Haftverschlußteile, die man auch den mechanischen Befestigungselementen zurechnet, bilden mit komplementär ausgebildeten Haftverschlußteilen einen immer wieder neu zu öffnenden und zu schließenden Verschluß aus, wobei Haken oder pilzkopfartige Verschlußteile mit schlingenartigen Verschlußelementen eines anderen Haftverschlußteils unter Bildung des Haftverschlusses zusammenwirken. Auch sind Lösungen bekannt, bei denen gleiche Haftverschlußelemente zweier verschiedener Haftverschlußteile miteinander zusammenwirken (hermaphroditischer Verschluß).

So ist es durch die DE 699 22 264 T2 bekannt, ein bandartiges Trägerteil mit einer Vielzahl an vorstehenden Stielteilen einem Formgebungsspalt zwischen beheizbaren Formwalzen zuzuführen, in den über eine Extrudereinrichtung ein zusätzliches Formgebungsband aus Kunststoffmaterial zuführbar ist, das als eigentliches Formwerkzeug mit Formausnehmungen die warmen Stielenden der Stielteile zu Kopfteilen umformt, um dergestalt ein pilzkopfartiges Haftverschlußteil zu erhalten. Da die genannten Kopfteile bei der bekannten Lösung aus dem Kunststoffmaterial der Stielteile gebildet werden, fallen insoweit die Kopfteile wegen des geringen Materialeintrages in der zur Verhakung zur Verfügung stehenden freien und mithin überstehenden Kopffläche gering aus, was sich nachteilig auf die benötigten Haftkräfte auswirken kann.

Demgegenüber schlägt die US 6 180 205 B1 ein Herstellverfahren vor unter Einsatz einer Formgebungswalze, bei der ein bandartiges Trägerteil mit einer Vielzahl an relativ groß dimensionierbaren Hakenverschlußelementen verbindbar ist. Hierzu weist die Formgebungswalze an ihrem Außenumfang hakenförmige Formausnehmungen auf, in die über eine erste Extrudereinrichtung Kunststoffmaterial formausfüllend hineingedrückt wird. Überschüssiges Kunststoffmaterial auf der Außenumfangsseite der Formgebungswalze wird mittels einer Schneidabtrageinrichtung, die man fachsprachlich als Doktor-Blade bezeichnet, abgetragen. Mittels einer in Herstellrichtung nachgeordneten zweiten Extrudereinrichtung wird dann das Trägerteilmaterial aufgebracht und mit den hakenförmigen Verschlußteilen während des Abkühlprozesses der Walze fest verbunden. Eine Abziehwalze entfernt dann das fertige Verschlußteil von der Formgebungseinrichtung. Aufgrund der Hakengeometrie kann es hierbei zu Schwierigkeiten während des Entformungsvorganges kommen und des weiteren entsteht beim Herstellvorgang ein relativ hoher Anteil an Kunststoffabfall bedingt durch den Einsatz der genannten Doktor-Blade.

Durch die WO 2006/099000 A2 ist es weiter bekannt, eine bandartige Fördereinrichtung auf ihrer Obertrumseite mit Tröpfchen aus Kunststoffmaterial zu besprühen, wobei das Kunststoffmaterial sich aufgrund seiner Oberflächenspannung zu halbkugelförmigen Schalenkörpern formt, die dann an ihrer Wölbungsoberseite mit einem bandartigen Trägerteil unter Bildung des Haftverschlußteils fest verbunden werden. In Fortgestaltung dieser Lösung ist es auch möglich, in der Art von verdickten Stielteilen ein bandartiges Trägerteil zuzuführen, das auf seiner Oberseite bereits körnchenförmige Agglomerate als Stielteile trägt, auf die dann die halbschalenförmigen Kopfteile aufsetzbar sind. Das derart hergestellte Haftverschlußteil, das insbesondere als Verschluß für Baby- und Inkontinenzwindeln dienen soll, ist jedoch relativ steif ausgebildet und läßt insoweit noch Wünsche im Hinblick auf die Verschlußcharakteristik offen. Durch die US 2006/0220271 A1 ist eine vergleichbare Lösung bekannt, die jedoch zur Herstellung der halbschalenförmigen Verschlußelemente ein Formwerkzeug in Form einer Formwalze mit entsprechenden Formausnehmungen anstelle eines Bandes vorsieht. Ein Herstellen von Stielteilen zwischen Kopfteilen und Trägerteil erfolgt mit dieser bekannten Lösung insoweit nicht.

Durch das amerikanische Patent 5 785 784 ist ein Herstellverfahren bekannt zum Herstellen eines bandartigen Trägerteils, auf dem sich eine Vielzahl an vorstehenden Stielteilen befindet. In einem nachgeordneten Herstellschritt werden die freien Stielenden erwärmt, die sich dann aufgrund der Oberflächenspannung des Kunststoffmaterials zu einem insbesondere halbkugelförmigen Kopfteil verdicken. Sofern in Fortsetzung der bekannten Lösung die derart herstellbaren Kopfteile mittels eines sog. Kalanderwalzverfahrens nachverformt werden, entstehen insoweit zwar verbreiterte Kopfteilgeometrien; die im Hinblick auf den geringen Materialeintrag aber immer noch relativ klein dimensioniert sind und in Richtung der früheren Walzrichtung verbreitert sind.

Durch die DE 693 11 107 T2 ist ein gattungsgemäßes Verfahren zum Herstellen eines Kunststoff-Haftverschlußteils bekannt mit einer Basis als Trägerteil und mit mehreren Stielteilen, die jeweils ein von dem Trägerteil abstehendes proximales Ende und ein mit einem Kopfteil versehenes distales Ende aufweisen, mit den folgenden Verfahrensschritten:
a) Bereitstellen einer dauerhaften Trägerteil-Form als erstes Formwerkzeug zum Formen des Trägerteils des Haftverschlußteils;
b) Bereitstellen einer nicht dauerhaften Stielteil-Form als zweites Formwerkzeug mit mehreren Durchlässen zum Formen der Stielteile;
c) Bereitstellen einer dauerhaften Kopfteil-Form als drittem Formwerkzeug mit mehreren Hohlräumen zum Formen der Kopfteile;
d) Befestigen der nicht dauerhaften Stielteil-Form an der Trägerteil-Form derart, dass sich die Durchlässe der Stielteil-Form in Fluidverbindung mit dem Hohlraum der Trägerteil-Form befinden und Befestigen der Kopfteil-Form an der nicht dauerhaften Stielteil-Form derart, dass sich die Hohlräume der Kopfteil-Form in Fluidverbindung mit den Durchlässen der nicht dauerhaften Stielteil-Form befinden.

WO 00/50208 offenbart ein Verfahren zum Herstellen eines Kunststoff-Haftverschlussteils gemäß dem Oberbegriff des Anspruchs 1.

Durch Einspritzen eines geeigneten geschmolzenen Kunststoffs in die drei genannten Formwerkzeuge nebst Aushärten desselben entsteht das Kunststoff-Haftverschlußteil, wobei durch Separieren der Kopfteil-Form von der Trägerteil-Form nebst Entfernen der nicht dauerhaften Stielteil-Form das derart entformte Haftverschlußteil als handelsfähiges Produkt vorliegt. Die bekannte Lösung betrifft darüber hinaus eine Formvorrichtung, die durch die drei voneinander verschiedene Formwerkzeuge charakterisiert ist, gebildet aus der dauerhaften Trägerteil-Form, der dauerhaften Kopfteil-Form sowie der nicht dauerhaften Stielteil-Form. Aufgrund der Vielzahl an Einzelformen, die zur Verfügung zu stellen sind und die im Herstellprozeß gehandhabt werden müssen, ist insoweit ein gewisser Bereitstellungs- und Herstellaufwand notwendig.

Ausgehend von diesem Stand der Technik stellt sich die Erfindung die Aufgabe, die bekannten Lösungen unter Beibehalten ihrer Vorteile weiter zu verbessern, insbesondere bei geringen Herstellkosten ein funktionssicheres Haftverschlußteil zu schaffen, das in weiten Bereichen von seinem Verschlußverhalten her einstellbar ist.

Eine dahingehende Aufgabe löst ein Verfahren mit den Merkmalen des Patentanspruches 1 sowie eine Vorrichtung mit den Merkmalen des Patentanspruches 6.

Das erfindungsgemäße Verfahren ist dadurch charakterisiert, dass die Kopfteile des Haftverschlußteils aufgrund der Oberflächenspannung des eingesetzten Kunststoffmaterials formwerkzeugfrei gebildet werden. Da man gemäß der Erfindung die Kopfteile während des Erstarrungsvorganges sich selbst bilden läßt, kann auf ein eigenständiges, teures Formwerkzeug zur Bildung der Kopfteile, wie im Stand der Technik aufgezeigt, vollständig verzichtet werden. Auch läßt sich insoweit das Verfahren sehr rationell durchführen, da nur zwei Formwerkzeuge gehandhabt werden müssen.

Es besteht zum einen die Möglichkeit, durch Einspritzen oder Eingießen von Kunststoffmaterial in ein Formwerkzeug zunächst das Trägerteil als Basis des Haftverschlußteils herzustellen, dann das Formwerkzeug für die Stielteile als verlorene Form einzubringen, indem das dahingehende Formwerkzeug auf die Oberseite des Trägerteils aufgelegt wird, um dann anschließend in einem weiteren Verfahrensgang die Stielteile in die Kavitäten oder Formausnehmungen des Formwerkzeuges als verlorene Form einzubringen, wobei ein gewisser Materialüberschuß für jedes Stielteil über die zugeordnete Kavität der verlorenen Form übersteht, um dann insoweit aufgrund der Oberflächenspannung des eingesetzten Materials das Kopfteil sich selbst bilden zu lassen. Für den dahingehend separaten Aufsetzschritt von Stielteil nebst Kopfteil kann das Kunststoffmaterial des Trägerteils bereits ausgehärtet oder entsprechend nur teilgehärtet ausgebildet sein. Nach Formen der Stielteile im zugeordneten Formwerkzeug und nach selbständigem Formen und Aushärten der Kopfteile auf dessen freier Planoberseite läßt sich das Formwerkzeug von den dann ausgehärteten Stielteilen abziehen und das Haftverschlußteil ist derart fertig erstellt. Durch die Realisierung des Formwerkzeuges für die Stielteile als verlorene Form ist eine kostengünstige Alternative geschaffen, die gegenüber den sonstigen Vollformwerkzeugen für Haftverschlußteile ein insoweit auch effizienteres Herstellverfahren zuläßt.

Bei einer alternativen, bevorzugten Ausführungsform der erfindungsgemäßen Lösung ist vorgesehen, in das dauerhafte Formwerkzeug als Teil der Formvorrichtung ein geeignetes flüssiges Kunststoffmaterial unter Bildung eines Tauchbades einzubringen, insbesondere einzuspritzen, um dann anschließend in dieses Tauchbad von oben her das nicht dauerhafte Formwerkzeug mit seinen Formausnehmungen für die Stielteile aufzudrücken. Bevorzugt sind hierfür geeignete Aktuatoren vorgesehen, die das Stielteil-Formwerkzeug in das Tauchbad teilweise einbringen. Das dann noch flüssige oder teilplastifizierte Kunststoffmaterial steigt dann durch die Formausnehmungen des als verlorene Form ausgebildeten Formwerkzeuges in vertikaler Richtung gesehen nach oben und bildet insoweit die Stielteile aus. Sofern das Formwerkzeug noch weiter in das Tauchbad eingedrückt wird, wird dann Kunststoffmaterial aus den Formausnehmungen heraus nach oben verdrängt, so dass sich insoweit das überschüssige Kunststoffmaterial auf der Oberseite des Formwerkzeuges für die Stielteile ansammelt und aufgrund der Oberflächenspannung bilden sich dann die kalotten- oder halbkugelförmigen Kopfteile wiederum selbständig aus. Nach Aushärten des Haftverschlußteils wird dann wieder, wie bereits aufgezeigt, das Formwerkzeug für die Stielteile als verlorene Form entfernt und das Haftverschlußteil ist für seine weitere Verwendung fertig erstellt und aus der Formvorrichtung entnehmbar.

Die jeweils zum Einsatz kommenden beiden Formwerkzeuge bilden einmal ein feststehendes Formwerkzeug für das Trägerteil und einmal eine verlorene Form für die Stielteile aus. Vorzugsweise sind beide Formwerkzeuge in der Art von Spritzgußwerkzeugen ausgebildet, die sich kostengünstig realisieren lassen und die im Hinblick auf ihren konstruktiv einfachen Aufbau die Prozeßsicherheit erhöhen. Sofern im Stand der Technik die bekannten kompliziert aufbauenden Herstellvorrichtungen temperaturmäßig genau anzusteuern sind, ist dies mit dem Einsatz des erfindungsgemäßen Verfahrens nicht mehr notwendig, was wiederum die Produktionskosten senken hilft und den Gesamtpreis des fertigen Haftverschlußproduktes reduziert.

Mit dem erfindungsgemäßen Verfahren können auch anspruchsvolle Kunststoffmaterialien, wie Acrylatwerkstoff, für das gesamte Haftverschlußteil oder Teilen davon zum Einsatz gebracht werden. Insbesondere bei dem erstgenannten zweistufigen Prozeß ließe sich beispielsweise das Trägerteil aus einem Acrylatwerkstoff herstellen und die aufzusetzenden Stielteile nebst den sich selbst erzeugenden Kopfteilen könnten aus einem thermoplastischen Kunststoffmaterial bestehen, so dass zum einen ein relativ fester Träger erreicht wäre und die Verschlußelemente selbst in Form des jeweiligen Stielteils nebst zugehörigem Kopfteil könnten entsprechend nachgiebig gestaltet einem guten Untergriff des korrespondierenden Haftverschlußteils, sei es in Form von Schlaufenmaterial, sei es in Form von pilzkopfartigen Verhakungselementen, förderlich sein.

Die erfindungsgemäße Formvorrichtung zum Durchführen des Herstellverfahrens ist in der Art eines Spritzgußwerkzeuges ausgebildet und weist eine entsprechende Formausnehmung auf für das Einlegen des folienartigen Formwerkzeuges, das die Stielteile des Haftverschlußteils entsprechend formt. Das dahingehend weitere Formwerkzeug ist vorzugsweise modulartig aufgebaut, so dass verschlissene Komponenten ohne weiteres gegen Neukomponenten austauschbar sind und das folienartige Formwerkzeug ist ohnehin als neu zu ersetzendes Verlierteil ausgebildet, was den Vorteil hat, dass im Hinblick auf die dünnen Stielquerschnitte immer wieder ein neues Formwerkzeug zur Verfügung steht, was die Abbildungsgenauigkeit für die gewünschten Stielquerschnitte verbessert.

Weitere vorteilhafte Ausführungsformen der genannten Erfindung sind Gegenstand der sonstigen Unteransprüche.

Im folgenden wird die erfindungsgemäße Lösung anhand eines Ausführungsbeispiels nach der Zeichnung näher erläutert. Dabei zeigen in prinzipieller und nicht maßstäblicher Darstellung die
- Fig.1: eine Schnittdarstellung durch eine Formvorrichtung;
- Fig.2: eine Draufsicht auf einen Teil der Formvorrichtung nach der Fig.1;
- Fig.3: in perspektivischer Draufsicht die modular aufgebaute Formvorrichtung nach der Fig.1 in zusammengebautem Zustand.

Das im folgenden beschriebene, erfindungsgemäße Verfahren dient dem Herstellen eines Kunststoffhaftverschlußteils, das ein bandartiges Trägerteil 10 aufweist, von dem eine Vielzahl an Stielteilen 12 vorsteht, an deren dem Trägerteil 10 gegenüberliegenden Enden jeweils ein Kopfteil 14 angeordnet ist. Der einfacheren Darstellung wegen beziehen sich die Figuren auf ein Haftverschlußteil mit insgesamt sechs Verschlußelementen, bestehend jeweils aus Stielteil 12 mit Kopfteil 14, die paarweise jeweils in Dreier-Reihen nebeneinander angeordnet sind. Hierdurch entsteht ein Haftverschlußteil mit einem nahezu quadratischen Trägerteil als Trägerband 10. In Erweiterung der Anordnung kann in Abhängigkeit der Art der jeweils eingesetzten Formvorrichtungen selbstverständlich darüber hinaus eine beliebige Anzahl an Verschlußelementen für ein Haftverschlußteil geschaffen werden. Ferner sind als Kopfteile 14 sphärische Halbkugelformen offenbart, die sich unter der Oberflächenspannung des eingesetzten Kunststoffmaterials von selbst bilden, und zwar beim Erkalten oder Erstarren des Kunststoffes.

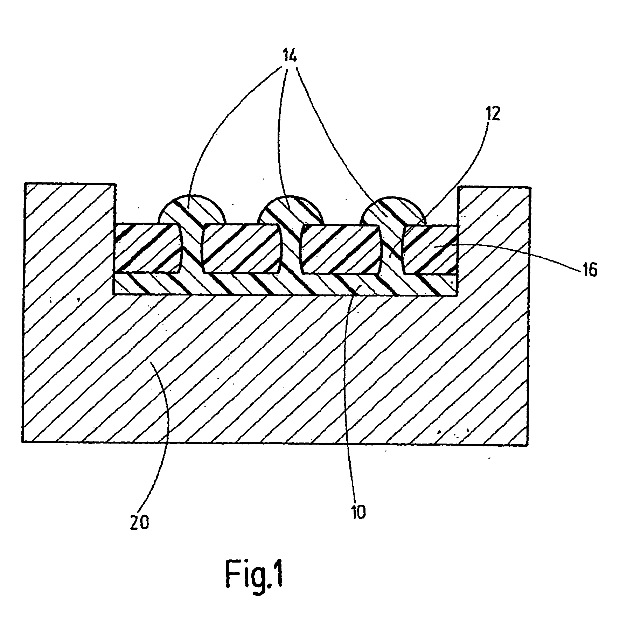

Das erfindungsgemäße Verfahren ist dadurch charakterisiert, dass zur Formung der Stielteile 12 ein Formwerkzeug 16 eingesetzt wird, das sich zwischen Trägerteil 10 und den Kopfteilen 14 gemäß Darstellung der Formvorrichtung nach der Fig.1 erstreckt, wobei nach Formen der Stielteile 12 das Formwerkzeug 16 in einem separaten Entformvorgang entfernt wird. Als Formwerkzeug 16 kann beispielsweise eine thermoplastische Folie eingesetzt werden, die in kaltem Zustand stabile Formausnehmungen 18 für die zu formenden Stielteile 12 bildet und zum Entformen derart erwärmt wird, dass sie im elastischen Zustand von den geformten Stielteilen 12 mit den Kopfteilen 14 abziehbar ist. Als thermoplastische Folie kann hierbei bevorzugt eine solche aus Low-Density-Polyethylen (LDPE) - Material eingesetzt werden. Im vorliegenden Ausführungsbeispiel nach den Figuren sind die Formausnehmungen 18 im Querschnitt gesehen kreisrund ausgebildet, so dass dergestalt zylindrische Stielteile 12 entstehen; hier wären aber auch andere Querschnittsformen in Abhängigkeit der Geometrie der Formausnehmungen 18 denkbar, beispielsweise für den Erhalt von Stielteilen 12 mit Mehreckquerschnitt oder ovalem Querschnitt.

Die Länge der Stiele 12 orientiert sich wiederum an der Dicke bzw. an der Einsetzhöhe der das Formwerkzeug 16 bildenden Folie, die im kalten Zustand starr ausgebildet sein kann; aber auch als biegsame Folie konzipiert sein kann. Insbesondere eignet sich die thermoplastische LDPE - Folie im kalten Zustand für einen Spritzgießvorgang, bei dem das Haftverschlußteil durch Spritzgießen hergestellt wird und zum Entformen wäre die Folie auf einen Wert (beispielsweise 80°) zu erwärmen, bis sie derart dehnelastisch ist, dass sie von dem fertigen Verschlußteil, ohne dieses zu beschädigen und insbesondere ohne die Köpfe 14 abzureißen, abgezogen werden kann. Die abgezogene verformte Folie als Formwerkzeug 16 könnte dann erneut in einen nicht näher dargestellten Extruder gegeben werden, der dann erneut ein neues Formwerkzeug 16 generiert. Die Folie kann auch als Ganzes extrudiert werden und wäre dann zur Bildung der Formausnehmungen 18 für die Stielteile 12 entsprechend zu perforieren.

Als Formwerkzeug 16 könnte aber auch eine Folie eingesetzt sein, die sich chemisch, thermisch oder biologisch auflösen läßt. Diese sollte wiederum im eigentlichen Formzustand stabile Formausnehmungen 18 bilden und könnte dann aber zum Entfernen von den fertig geformten Stielteilen 12 mittels eines Lösemediums aufgelöst werden. Für eine dahingehend auflösende Folie käme insbesondere eine wasserlösliche Folie in Betracht gebildet aus Gelatinematerial oder Polyvinylacetat. Als Kunststoffmaterialien für das eigentliche Haftverschlußteil kommen thermoplastische Kunststoffe in Frage, wie beispielsweise Polyamid, Polypropylen oder Polyethylen. Vorzugsweise ist jedoch das Haftverschlußteil aus einem UV-vernetzbaren Acrylatmaterial gebildet, was zu einem besonders widerstandsfähigen robusten Verschlußmaterial führt.

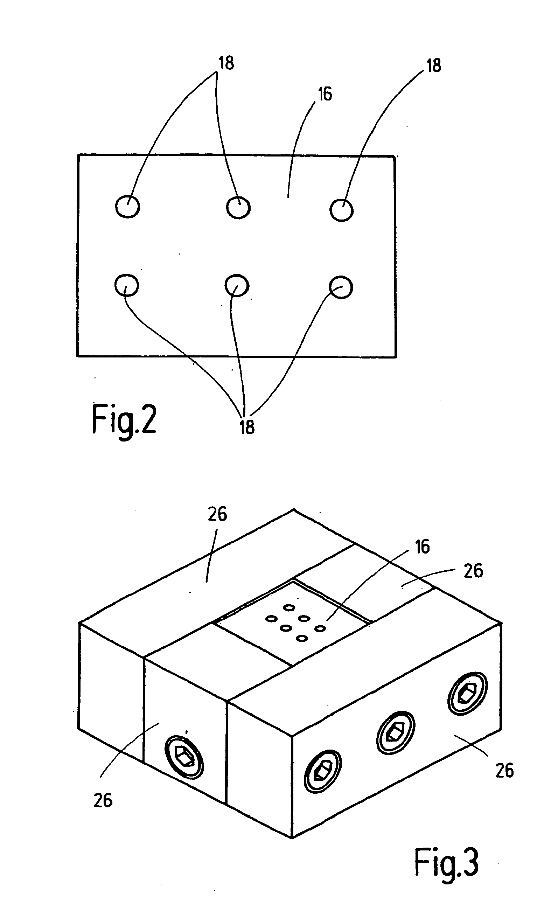

Die in den Fig.1 und 2 gezeigte Formvorrichtung ist in der Fig.3 noch näher dargestellt, insbesondere in der Art eines Spritzgußwerkzeuges aufgebaut. Neben dem als Einlegeteil ausgebildeten Formwerkzeug 16 weist die Formvorrichtung ein weiteres Formwerkzeug 20 auf, das aus einzelnen Basisblöcken modular zusammensetzbar ist. So ist unterhalb des als Einlegeteil ausgebildeten Formwerkzeuges 16 ein quadratischer Formblock vorhanden, der die konkave Formvertiefung aufweist zur Formung des rechteckförmigen Trägerteils 10. Über den dahingehenden Formblock wird deckungsgleich betreffend die gemeinsamen Längsachsen das Formwerkzeug 16 gelegt und der dahingehende Verbund wird dann von vier Halteblöcken 26 zusammengefaßt, die gegeneinander verschraubt werden sowie mit dem Formblock.

Ein dahingehender Verbundblock aus Einzel-Halteblöcken 26 mit Einlegeteil 16 kann auch in der Art eines umlaufenden Bandes in Reihe mehrfach hintereinander und/oder nebeneinander angeordnet sein, so dass dergestalt eine Massenfertigung realisierbar wäre ebenso wie die Herstellung größerer Haftverschlußteile mit einer Vielzahl von über die Zahl Sechs hinausgehenden Verschlußelementen. Um für das Spritzgießen einen stabilen Formvorrichtungsverbund zu erreichen, wird vorzugsweise für die Formvorrichtung und für deren Komponenten Aluminiummaterial eingesetzt. Zum Perforieren des Formwerkzeuges 16 kann ein nicht näher dargestelltes Wasserstrahl-Schneidverfahren eingesetzt sein. Ferner kann zum Durchhärten des Acrylatkunststoffes für das Haftverschlußteil eine nicht näher dargestellte Wärmeeinrichtung dienen oder eine UV-Vernetzung vorgesehen sein.

Ferner besteht die Möglichkeit, mittels nicht näher dargestellter Injektordüsen die Formausnehmung innerhalb des Formwerkzeuges 20 in Blickrichtung auf die Fig.1 gesehen von unten her mit einer Art an Kunststoffmaterial zu befüllen, um dann in einem nachgeordneten Herstellschritt ein anders geartetes Kunststoffmaterial für die Stielteile 12 und das Trägerteil 10 von oben her einzubringen. Dergestalt ließe sich dann das Trägerteil 10 aus besonders hartem Acrylatmaterial ausbilden und die Stielteile 12 nebst Kopfteilen 14 könnten aus einem anders gearteten thermoplastischen Kunststoffmaterial bestehen. Im umgekehrten Fall könnten auch die Stiel- und Kopfteile 12,14 aus hartem Acrylatwerkstoff gebildet sein.

Bei der Ausführungsform nach der Fig.1 wird in die Formvorrichtung zunächst ein geeignetes flüssiges Kunststoffmaterial unter Bildung einer Art Tauchbad eingebracht, insbesondere eingespritzt, und anschließend in Blickrichtung auf die Fig.1 gesehen von oben her mit einem geeigneten Aktuator (nicht dargestellt) das Formwerkzeug 16 mit seinen Formausnehmungen 18 aufgedrückt. Das dann noch flüssige oder teilplastifizierte Kunststoffmaterial steigt dann durch die Formausnehmungen 18 des Formwerkzeuges 16 in Blickrichtung auf die Fig. 1 gesehen nach oben und bildet dergestalt die Stielteile 12 aus. Das überschüssige Kunststoffmaterial sammelt sich dann auf der planen Oberseite des Formwerkzeuges 16 und aufgrund der Oberflächenspannung bilden sich dergestalt halbkugelförmige Kopfteile 14 aus. Nach Aushärten des Haftverschlußteils wird dann, wie bereits aufgezeigt, das Formwerkzeug 16 als verlorene Form entfernt.

Die angesprochene Folie als Formwerkzeug 16 kann aus einem ElastomerMaterial, wie Silicon, bestehen und insbesondere elastische Eigenschaften aufweisen. Es wäre aber auch denkbar, als Formwerkzeug 16 eine dünnwandige Aluminiumfolie einzusetzen, die sich für einen Entformvorgang des Haftverschlußteils zerreißen oder zerschneiden läßt. Auch sind elastisch nachgiebige Gazelösungen denkbar, die in Abhängigkeit ihrer vorgebbaren Elastizität auch am Haftverschlußteil verbleiben können. Drückt man das elastisch nachgiebige Material, insbesondere Gazematerial, entlang der Längsachse des jeweiligen Stielteiles 12 zusammen, beispielsweise indem man ein korrespondierendes Haftverschlußteil derart auf die Folie aufdrückt, kann zwischen Oberseite der verbleibenden Folie und Unterseite des Kopfteilmaterials noch ein Spalt verbleiben, in den das jeweilige Verhakungsmittel des korrespondierenden Haftverschlußteils in verhakender Weise eingreifen kann.

Wenn man das Formwerkzeug 16 auf seiner Oberseite mit entsprechenden Geometrien versieht, beispielsweise in Form von kalottenförmigen Ausnehmungen (nicht dargestellt), ließe sich als Kopfteil 14 auch ein Vollkugelkopf erhalten. Sofern zur jeweiligen Stiellängsachse ein konzentrischer Umfassungsrand (nicht dargestellt) in die Oberseite des Formwerkzeuges 16 eingebracht ist, kann beim Erstarrungsvorgang verdrängtes Kunststoffmaterial in die dahingehende Formrille eindringen, so dass auf der Unterseite des jeweils zu bildenden Kopfteils 14 ein ringförmiger Vorsprung entsteht, der später die Verhakungssituation für den Gesamt-Haftverschluß verbessern hilft. Insoweit besteht also auch eine Vielzahl an Möglichkeiten, das jeweilige Kopfteil 14 auf seiner dem Formwerkzeug 16 benachbarten Unterseite zu gestalten. Auch wäre es möglich, mit nur einem Formwerkzeug 16 insoweit von der Unterseite her verschiedene Gestaltungsmöglichkeiten für ein Haftverschlußteil zu erhalten.

## Patentansprüche

1. Verfahren zum Herstellen eines Kunststoff-Haftverschlußteils, das ein Trägerteil (10) aufweist, von dem eine Vielzahl an Stielteilen (12) vorsteht, an deren dem Trägerteil (10) gegenüberliegenden Enden jeweils ein Kopfteil (14) angeordnet ist, wobei zur Formung der Stielteile (12) ein Formwerkzeug (16) eingesetzt wird, das sich zwischen Trägerteil (10) und den Kopfteilen (14) erstreckt und das nach Formen der Stielteile (12) in einem Entformvorgang entfernt wird, **dadurch gekennzeichnet, dass** die Kopfteile (14) aufgrund der Oberflächenspannung des eingesetzten Kunststoffmaterials formwerkzeugfrei gebildet werden.

2. Verfahren nach Anspruch 1, **dadurch gekennzeichnet, dass** als Formwerkzeug (16) eine thermoplastische Folie eingesetzt wird, die in kaltem Zustand stabile Formausnehmungen (18) für die zu formenden Stielteile (12) bildet und zum Entformen derart erwärmt wird, dass sie im elastischen Zustand von den geformten Stielteilen (12) mit den Kopfteilen abziehbar ist.

3. Verfahren nach Anspruch 2, **dadurch gekennzeichnet, dass** als thermoplastische Folie eine Folie aus Low-Density-Polyethylen-Material eingesetzt wird.

4. Verfahren nach Anspruch 1, **dadurch gekennzeichnet, dass** als Formwerkzeug (16) eine sich chemisch, thermisch oder biologisch auflösende Folie eingesetzt wird, die im Formzustand stabile Formausnehmungen (18) für die zu formenden Stielteile (12) bildet, und zum Entfernen von den Stielteilen (12) mittels eines Lösemediums aufgelöst wird.

5. Verfahren nach Anspruch 4, **dadurch gekennzeichnet, dass** als auflösende Folie eine wasserlösliche Folie, bestehend aus Gelatine oder Polyvinylacetat, eingesetzt wird.

6. Formvorrichtung zum Durchführen des Herstellverfahrens nach einem der Ansprüche 1 bis 5, **dadurch gekennzeichnet, dass** ein weiteres Formwerkzeug (20) vorhanden ist, in das das folienartige Formwerkzeug (16) einlegbar ist.

7. Formvorrichtung nach Anspruch 6, **dadurch gekennzeichnet, dass** zumindest das weitere Formwerkzeug (20) als Spritzgußwerkzeug ausgebildet ist.

8. Formvorrichtung nach Anspruch 6 oder 7, **dadurch gekennzeichnet, dass** das weitere Formwerkzeug (20) eine Ausnehmung aufweist, deren Höhe derart bemessen ist, dass zumindest das Trägerteil (10) mit den Stielteilen (12) und dem Formwerkzeug (16) aufnehmbar ist.

9. Formvorrichtung nach Anspruch 8, **dadurch gekennzeichnet, dass** der Boden der Ausnehmung zur Bildung des Trägerteils (10) eben ausgebildet ist.

## Claims

1. A method for producing a plastic adhesive fastener part that has a support part (10) from which a plurality of stem parts (12) projects, on the ends of which opposite the support part (10) there is respectively one head part (14), for moulding the stem parts (12) a moulding tool (16) being used which extends between the support part (10) and the head parts (14) and which is removed after moulding the stem parts (12) in a mould removal process, **characterised in that** the head parts (14) are formed free of a moulding tool as a result of the surface tension of the plastic material used.

2. The method according to Claim 1, **characterised in that** the moulding tool (16) is a thermoplastic film which in the cold state forms stable mould recesses (18) for the stem parts (12) to be moulded and is heated for removal from the mould such that in the elastic state it can be removed from the moulded stem parts (12) with the head parts.

3. The method according to Claim 2, **characterised in that** the thermoplastic film is a film of low density polyethylene material.

4. The method according to Claim 1, **characterised in that** the moulding tool (16) is a film which dissolves chemically, thermally or biologically, which in the mould state forms stable mould recesses (18) for the stem parts (12) to be moulded, and which is dissolved for removal from the stem parts (12) by means of a solvent.

5. The method according to Claim 4, **characterised in that** the dissolving film is a water-soluble film consisting of gelatine or polyvinyl acetate.

6. A moulding apparatus for carrying out the production process according to any of Claims 1 to 5, **characterised in that** there is another moulding tool (20) into which the film-like moulding tool (16) can be inserted.

7. The moulding apparatus according to Claim 6, **characterised in that** at least the other moulding tool (20) is made as an injection moulding tool.

8. The moulding apparatus according to Claim 6 or 7, **characterised in that** the other moulding tool (20) has a recess the height of which is such that at least the support part (10) with the stem parts (12) and the moulding tool (16) can be held.

9. The moulding apparatus according to Claim 8, **characterised in that** the bottom of the recess is made flat for forming the support part (10).

## Revendications

1. Procédé de fabrication d'une partie de fermeture autoagrippante en matière plastique, qui a une partie (10) de support, de laquelle partent une pluralité de parties (12) de tige, aux extrémités desquelles opposées à la partie (10) de support (10) est disposée respectivement une partie (14) de tête, dans lequel, pour former les parties (12) de tige, on utilise un outil (16) de moulage, qui s'étend entre la partie (10) de support et la partie (14) de tête et qui, après le moulage des parties (12) de tige, est retiré dans une opération de démoulage, **caractérisé en ce que** les parties (14) de tête sont formées sans outil de moulage sur la base de la tension superficielle de la matière plastique utilisée.

2. Procédé suivant la revendication 1, **caractérisé en ce qu'**on utilise, comme outil (16) de moulage, une feuille de matière plastique, qui forme à l'état froid des empreintes (18) de moule stables pour les parties (12) de tige à mouler et qui est réchauffée pour le démoulage de manière à pouvoir être retirée à l'état élastique des parties (12) de tige moulées avec les parties de tête.

3. Procédé suivant la revendication 2, **caractérisé en ce qu'**on utilise, comme feuille thermoplastique, une feuille en une matière en polyéthylène basse densité.

4. Procédé suivant la revendication 2, **caractérisé en ce qu'**on utilise, comme outil (16) de moulage, une feuille se décomposant chimiquement, thermiquement ou biologiquement, qui, à l'état moulé, forme des empreintes (18) de moule stables pour les parties (12) de tige à mouler et, qui pour le retrait des parties (12) de tige, est dissoute au moyen d'un solvant.

5. Procédé suivant la revendication 4, **caractérisé en ce qu'**on utilise, comme feuille qui se dissout, une feuille soluble dans l'eau, en gélatine ou en poly(acétate de vinyle).

6. Dispositif de moulage pour effectuer le procédé de fabrication suivant l'une des revendications 1 à 5, **caractérisé en ce qu'**il y a un autre outil (20) de moulage, dans lequel l'outil (16) de moulage sous forme de feuille peut être mis.

7. Dispositif de moulage suivant la revendication 6, **caractérisé en ce qu'**au moins l'autre outil (20) de moulage est constitué en outil de moulage par injection.

8. Dispositif de moulage suivant la revendication 6 ou 7, **caractérisé en ce que** l'autre outil (20) de moulage a une empreinte dont la hauteur a des dimensions telles qu'au moins la partie (10) de support peut être logée avec les parties (12) de tige et l'outil (16) de moulage.

9. Dispositif de moulage suivant la revendication 8, **caractérisé en ce que** le fond de l'empreinte est constitué d'une manière plane pour la formation de la partie (10) de support.
